# EUROPEAN PATENT SPECIFICATION

(11) **EP 0 528 667 B1**
(45) Date of publication and mention of the grant of the patent: **06.12.1995**
(21) Application number: 92307481.9
(22) Date of filing: 14.08.1992
(51) Int. Cl.: B23K 11/04

(54) **Flash butt welding shield**
Schutzschild für Abbrennstumpfschweissaggregat
Ecran pour une machine de soudage en bout par étincelage

(30) Priority: 17.08.1991 GB 9117803
(43) Date of publication of application: 24.02.1993
(73) Proprietor: Bailey, Richard Trevor, Oxton, Birkenhead, Merseyside L43 6XE (GB)
(72) Inventor: Bailey, Richard Trevor, Oxton, Birkenhead, Merseyside L43 6XE (GB)
(74) Representative: W.P. Thompson & Co.

(56) References cited:
- DATABASE WPIL Week 8122, Derwent Publications Ltd., London, GB; AN 81-39333D & JP-A-56 039 176 (DAIDO TOKUSHUKO) 14 April 1981
- DATABASE WPIL Week 8321, Derwent Publications Ltd., London, GB; AN 8350981K & SU-A-941 070 (NEGODUIKO L.M. ET AL.) 7 July 1982

## Description

The present invention relates to shields for use in flash butt welding.

In flash butt welding, two ends, e.g. two components, to be welded are clamped onto a fixed and a moving platen respectively. Each end has an electrode attached to it, which is also used for clamping purposes. The current is switched on and the moving platen and its associated electrode are displaced towards the fixed electrode until arcing or "flashing" occurs across the gap between the two ends to be joined. During flashing, the ends are heated locally to forging temperature. The gap between the two ends is then closed and the two ends are rapidly forced together, causing plastic metal and impurities to be ejected violently. The resultant product may then be machined to remove excess and unwanted material from its periphery.

This is illustrated schematically in Fig. 6, where two workpieces in the form of pipes P1 and P2 are connected to electrodes 1 and 2 respectively. Each electrode 1, 2 is in the form of a fixed lower jaw 1a, 2a and a vertically displaceable upper jaw 1b, 2b. Each jaw is shaped to receive the respective workpiece, and the upper jaw is forced downwardly onto the workpiece by means of an hydraulic ram, thereby clamping the workpieces tightly. The electrode 1 is mounted on a fixed base 3, and the electrode 2 is mounted on a movable platen 4, thereby allowing the spacing of the protruding ends of the workpieces to be adjusted.

The resultant weld is very strong. However, without a suitable atmosphere, so-called "penetrators" and/or other imperfections may be formed through the weld plane. The penetrators do not affect the strength excessively for most welded articles, but in certain fields, e.g. in aerospace products which are manufactured from specialist alloys, penetrators can reduce the strength of the weld to an unacceptable level.

In SU-A-941070, the ends of two workpieces to be welded are each covered with a housing portion which, when moved together, form a chamber around the welding region. An inert gas can be fed to the chamber during welding. In JP-A-56-39176 a housing is located around a welding region and two objects to be joined extend into the housing through openings. Inert gas can be fed into the housing during welding.

The present invention results from the need to reduce oxide inclusions and other impurities at the weld plane to the absolute minimum.

It is an object of the present invention to provide a flash butt welding shield which overcomes or alleviates the aforementioned problems.

In accordance with of the present invention, there is provided a shield for a flash butt welding apparatus of the type having first and second electrodes, each having relatively displaceable upper and lower electrode portions and thereby being adapted to conductively clamp first and second workpieces respectively, and means for varying the separation of the first and second electrodes, the shield comprising enclosing walls connectible to the two electrodes and adapted to form an enclosed volume surrounding a welding region between the two electrodes, the enclosing walls comprising a deformable wall portion for permitting relative movement of the two electrodes and inlet means for the ingress of gas into the enclosed volume.

This forms an enclosed volume around the weld area, into which inert gas may be fed. The gas may be fed through the articles to be joined (e.g. if they are in the form of pipes) and/or there may be other means for supplying gas into the enclosed volume. The deformable wall portion is preferably flexible and advantageously comprises heat-resistant material, e.g. glass fibre. The deformable wall portion advantageously comprises a material which minimises the leakage of gas therethrough. For example, it may comprise a layer of silicon-coated glass fibre. The internal face of the deformable wall portion may be provided with a weld spatter release coating.

In one embodiment, the enclosing walls comprise an envelope which comprises two opposed walls jointed together to at least partially define the enclosed volume, each of the opposed walls comprising a deformable wall portion. Each opposing wall is preferably securable to an end face of a respective electrode.

In one embodiment, each of the opposed walls comprises a substantially rigid wall portion connectible to a respective one of the electrodes and a deformable wall portion connectible to the periphery of the substantially rigid wall portion. The rigid wall portion and the flexible wall portion both preferably have a generally circular outer periphery.

In a preferred embodiment, the shield comprises two separable portions, e.g. upper and lower portions, which are engageable with each other to define the enclosed volume. This facilitates positioning and removal of the workpieces.

In one embodiment, the shield comprises a first portion adapted to be connected to the upper electrode portion of each of the electrodes and a second portion adapted to be connected to the lower electrode portion of each of the electrodes. The shield may be further provided with coupling means to facilitate interengagement of the two portions. For example, an engaging edge of one of the portions may be flared outwardly.

In one embodiment of the present invention, the enclosing walls comprise an envelope surrounding the welding region between the electrodes, the envelope comprising upper and lower releasably interengageable envelope portions, each of which comprises two substantially rigid wall portions, each connected to a respective one of the electrode portions and a flexible wall portion secured to the periphery of the substantially rigid wall portion, the flexible wall portions of each of the envelope portions being connected together and the upper and lower envelope portions co-operating with each other when the electrode portions are in a workpiece-clamping position to form an enclosed volume around the welding region.

The present invention also includes a flash butt welding apparatus fitted with a shield in accordance with the present invention.

By way of example only, a specific embodiment of the present invention will now be described with reference to the accompanying drawings, in which:-
Fig. 1 is a side view of a flash butt welding machine fitted with an embodiment of flash butt welding shield in accordance with the present invention, shown in an open position;
Fig. 2 is a perspective view of the welding shield of Fig. 1, shown in an operative position;
Fig. 3 is an exploded perspective view of a portion of the welding shield of Fig. 1;
Fig. 4 is a cross-sectional side view showing the shield of Fig. 1 in a position in which flashing between two components occurs in a pre-welding condition;
Fig. 5 is a cross-sectional side view showing the shield of Fig. 1 in a position in which two components have been flash butt welded together; and
Fig. 6 is a perspective view showing the general principle of flash butt welding.

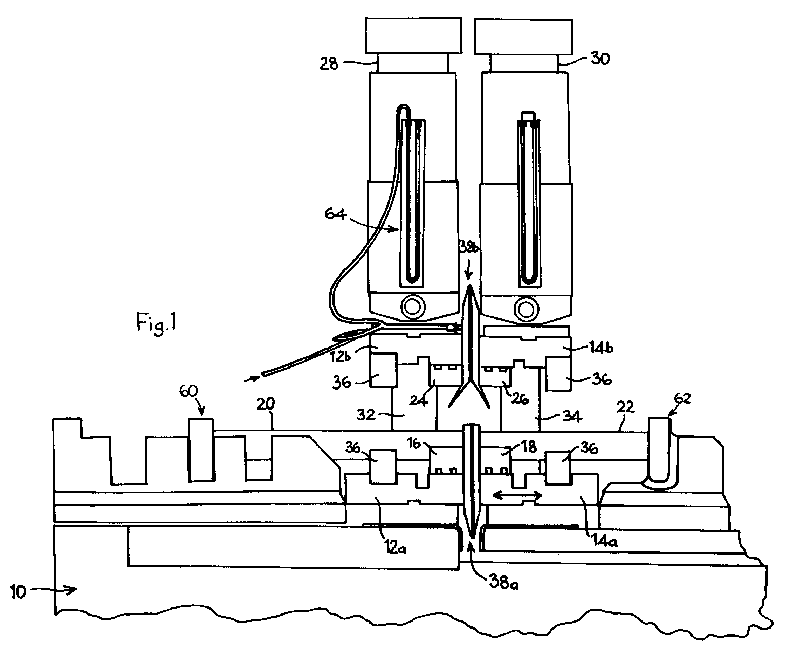

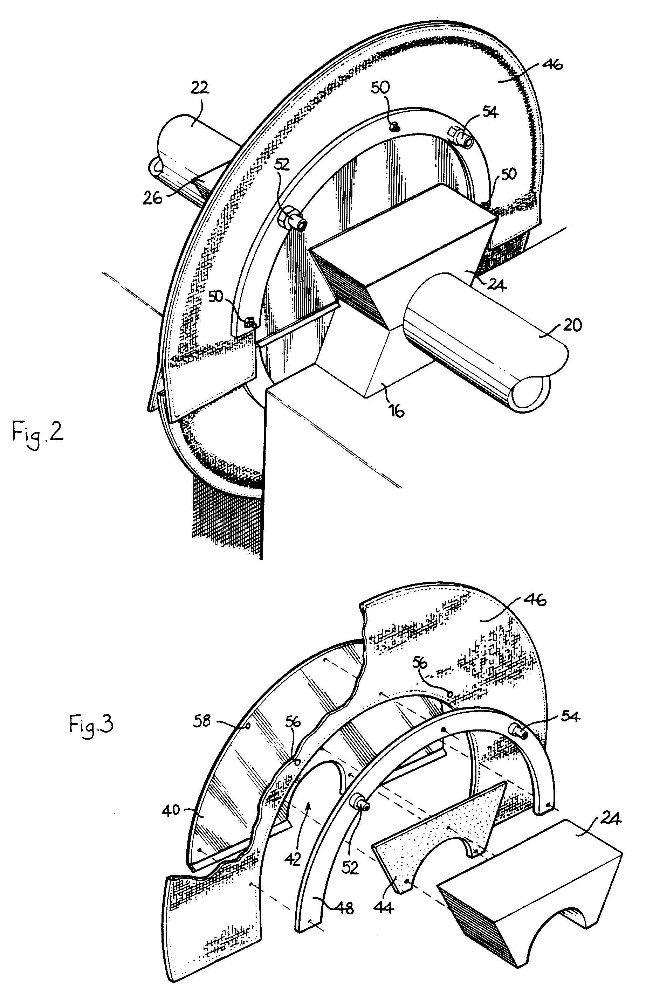

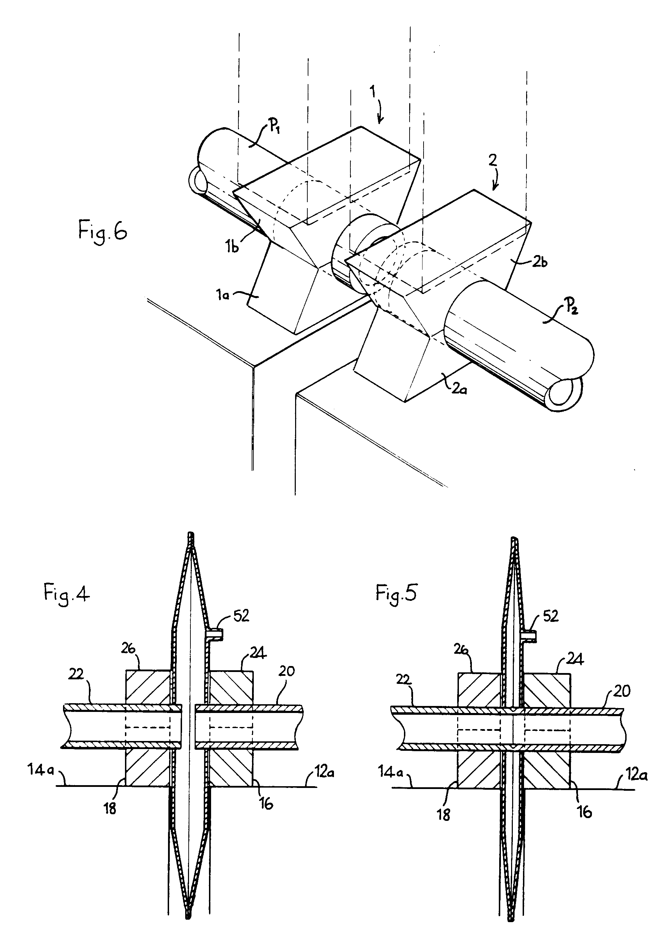

Referring firstly to Fig. 1, a flash butt welding machine comprises a base 10 upon whose upper surface is mounted a first fixed lower platen 12a and a second movable lower platen 14a which is displaceable in a horizontal plane towards and away from the fixed platen 12, as indicated by the arrow. Each platen is provided with a respective lower copper electrode portion 16, 18 which is shaped to receive the lower half of an article to be welded, e.g. pipes 20, 22. Each platen is also provided with a corresponding upper platen 12b, 14b, each provided with a copper electrode portion 24, 26 which is shaped to receive the upper half of an article to be welded. Each upper electrode portion is displaceable vertically into and out of contact with the corresponding lower electrode portion by displacing the upper platens 12b, 14b by means of hydraulic rams 28, 30, which are linked to operate together and which are also arranged to clamp the respective articles very tightly during flash welding. The upper platens 12b, 14b and their associated hydraulic rams are mounted on the fixed and movable lower platens 12a, 14a by means of support members 32, 34, such that the upper and lower electrode portions 26, 18 of the movable platen are always displaced together in the horizontal direction. It will also be noted that the upper and lower platens are provided with stops 36 at each corner, which are arranged to abut each other in order to prevent excessive movement of the upper platens, which might damage the electrodes and/or the workpieces.

The electrodes are also provided with lower and upper halves 38a, 38b of a flash butt welding shield 38. As seen in Figs. 2 to 5, each upper and lower half 38a, 38b is composed of two sides, each fixed to one of the electrodes. Fig. 3 shows one side of the upper half 38b, the other side being a mirror image, and the sides of the lower half 38a generally corresponding to those of the upper half, as will be explained.

Each side of the upper and lower halves thus comprises a semicircular steel plate 40 having a central semicircular aperture 42 to permit passage of a workpiece. The shape of the aperture 42 would be altered as appropriate if articles having a differently-shaped cross-section are to be joined. The steel plate 40 is bolted to the end face of upper electrode 24, with a high temperature glass fibre gasket 44 being located between the two components. Radially outward of the steel plate 40 is a flexible, heat resistant, annular membrane 46 constructed from an inner layer of silicon coated high temperature glass fibre, and an outer layer of fibreglass impregnated with silicon, the latter layer providing a relatively gas-impermeable barrier. The radially innermost portion of the membrane 46 overlaps the radially outermost portion of the steel plate 40 and the two are clamped together in the overlapping area by means of a semi-annular clamping ring 48 and three bolt and nut assemblies 50.

The clamping ring 48 associated with the particular electrode 24 is also provided with a gas inlet 52 and an air outlet 54, which are aligned with apertures 56, 58 in the membrane. The other three clamping rings, steel plates and membranes do not require these additional features.

As illustrated in Fig. 2, the outer peripheries of the two sides of the lower half 38a and of the upper half 38b are stitched together, thereby forming the lower and upper halves of the shield 38. It will also be noted that the lowermost portions of the membranes 46 of the upper half 38b of the shield extend below the steel plates 40 but the stitching does not extend to these portions, thereby enabling the portions of the two membranes to be flared outwardly. The uppermost portions of the membranes 46 of the lower half 38a similarly extend above its steel plates 40, but the stitching extends to the end of these portions. Similarly, the lowermost edges of the steel plates 40 of the upper half 38b are flared outwardly while the uppermost edges of the steel plates 40 of the lower half 38a extend vertically. In this way, as the upper half 38b is lowered, the uppermost portions are received in the outwardly flared portions of the lower half 38a, so that the volumes enclosed by the upper and lower halves are in communication with each other.

As indicated above, the components of both sides of both the upper and lower halves are identical to one another, with the exception that the upper most portions of the lower half 38a are not flared outwardly, and that only the side of the upper portion associated with the electrode 24 is provided with the gas inlet 52 and outlet 54 and associated apertures in the membrane 46 and the steel plate 40.

It should also be noted that the internal surfaces of the membranes may be coated with a release agent to prevent weld spatter from adhering to the side. More importantly, such adherence may result in subsequent damage to the workpieces and/or the electrodes. It might also cause a short circuit and restrict the flexibility of the membrane. A suitable release agent has been found to be ordinary waterbased paint, such as emulsion paint.

In use, the upper platens 12b, 14b are raised into the position shown in Fig. 1 by means of the hydraulic rams 28, 30. The ends of two workpieces (e.g. tubular pipes 20, 22) to be joined are placed in the lower electrode portions 16, 18 and are also supported on the two lower platens 12a, 14a. The ends of the workpieces remote from the electrodes may be placed in contact with incrementally adjustable end stops 60,62 to prevent longitudinal displacement of the workpieces with respect to their associated electrodes. The hydraulic rams 28, 30 are then actuated to lower the upper electrode portions 24, 26 into contact with the respective workpieces and to clamp the workpieces 20,22 tightly between the electrodes 16, 24 and 18, 26. This prevents inadvertent movement of the workpieces with respect to their associated electrodes.

Downward displacement of the upper electrode portions 24, 26 also causes engagement of the lower and upper halves 38a, 38b of the shield, with the flared edges of the steel plates 40 and the membranes 46 of the upper half 38b receiving the straight edges of the corresponding components of the lower half 38a. This creates a volume which totally encloses the ends of the workpieces 20, 22 to be joined. The overlap area between the upper and lower portions may also be sealed with industrial adhesive tape to complete the sealing of the enclosed volume.

High pressure inert gas, e.g. argon gas, is then allowed to flow through the workpieces 20,22 and thus flows into the volume enclosed by the welding shield 38. If solid components are being joined, then obviously this step is omitted. The volume enclosed by the shield is vented to atmosphere through the outlet 54 of the shield, and the applied pressure is monitored by means of a manometer 64 mounted on the housing which encloses the hydraulic ram 28. After a desired purging time, argon gas is also fed to the gas inlet 52 of the shield 38, the additional pressure being monitored by means of the manometer 64. After a further desired purging time, the exhaust to atmosphere is closed off by means of a valve (not visible in Fig. 1), and the argon supply is maintained.

The flash butt welding is then allowed to take place in the conventional manner. Current is applied to the two pairs of electrodes 16, 24 and 18, 26 and at the correct spacing of the exposed ends of the workpieces 20, 22 arcing or flashing occurs between the ends of the workpieces. This causes the ends of the workpieces to be heated locally to their fusion points. After a suitable time, depending upon the workpieces to be joined, the gap between the two components is closed, and the movable platen 14 is displaced hydraulically towards the fixed platen 12 to apply an "upset force" to the components 20, 22. This causes a violent expulsion of plastic metal and impurities formed during flashing, and the clean, molten end surfaces of the two components are plastically deformed, resulting in an extremely strong forged weld. The current can be switched off before, during or after application of the upset force, depending upon the particular circumstances, and the argon is switched off once welding has taken place.

As flashing occurs, it is necessary to displace the movable electrode gradually towards the fixed electrode to maintain flashing, since the ends of the workpieces become worn away during flashing. The provision of the flexible walls of the shield allows movement of the electrodes 18, 26 and the workpiece 22, while still providing an enclosed volume comprising an inert argon atmosphere around the weld area throughout the movement of the workpiece. The flexible walls of the shield also permit displacement of the electrode 18, 26 and the workpiece 22 during application of the upset force, while still maintaining the inert atmosphere around the weld region.

The provision of an inert atmosphere prevents oxygen from reaching the weld plane, and thereby virtually eliminates the possibility of oxides and other inclusions being present at the weld plane. The present invention enables the formation of inclusion-free welds whose strength can equal, or even exceed, that of the component materials.

## Claims

1. A shield (38) for a flash butt welding apparatus (10) of the type having first and second electrodes (16,24; 18,26), each having relatively displaceable upper (24,26) and lower (16,18) electrode portions and thereby being adapted to conductively clamp first and second workpieces (20,22) respectively, means (14) for varying the separation of the first and second electrodes, enclosing walls (40,46) adapted to form an enclosed volume surrounding a welding region between the two electrodes, and inlet means (52) for the ingress of gas into the enclosed volume, the shield being characterised in that the enclosing walls (40,46) are connectible to the two electrodes and comprise a deformable wall portion (46) for permitting relative movement of the two electrodes.

2. A shield as claimed in claim 1, wherein the enclosing walls comprise an envelope which comprises two opposed walls joined together to at least partially define the enclosed volume, each of the opposed walls comprising a deformable wall portion (46).

3. A shield as claimed in claim 2, wherein each opposed wall is securable to an end face of a respective electrode.

4. A shield as claimed in claim 2 or claim 3, wherein each of the opposed walls comprises a substantially rigid wall portion (40) connectible to a respective one of the electrodes and a deformable wall portion (46) connectible to the periphery of the substantially rigid wall portion.

5. A shield as claimed in claim 4, wherein the substantially rigid wall portion (40) is made from metal.

6. A shield as claimed in claim 4 or claim 5, wherein the substantially rigid wall portion (40) and the deformable wall portion (46) both have a generally circular outer periphery.

7. A shield as claimed in any of claims 1 to 6, wherein the deformable wall portion (46) is flexible.

8. A shield as claimed in any of claims 1 to 7, wherein the deformable wall portion (46) comprises heat-resistant material.

9. A shield as claimed in any of claims 1 to 8, further comprising a weld spatter release coating on the internal surface of the deformable wall portion (46) .

10. A shield as claimed in any of the preceding claims, further comprising outlet means (54) for the egress of air and gas from the enclosed volume.

11. A shield as claimed in any of the preceding claims, comprising two separable portions (38a,38b) which are engageable with each other to define the enclosed volume.

12. A shield as claimed in claim 11, comprising a first portion (38b) adapted to be connected to the upper electrode portion of each of the electrode means and a second portion (38a) adapted to be connected to the lower electrode portion of each of the electrode means.

13. A shield as claimed in claim 11 or claim 12, further comprising coupling means for facilitating interengagement of the two portions (38a,38b).

14. A shield as claimed in claim 13, wherein the coupling means comprises an outwardly flaring portion on an engaging edge of one of the portions.

15. A shield as claimed in claim 1 wherein the enclosing walls comprise an envelope surrounding the welding region between the electrodes, the envelope comprising upper (38b) and lower (38a) releasably interengageable envelope portions, each of which comprises two substantially rigid wall portions (40), each connectible to a respective one of the electrode portions and a flexible wall portion (46) secured to the periphery of the substantially rigid wall portion (40), the flexible wall portions (46) of each of the envelope portions being connected together and the upper (38b) and lower (38a) envelope portions co-operating with each other when the electrode portions are in a workpiece-clamping position to form an enclosed volume around the welding region.

16. A flash butt welding apparatus (10) of the type having first and second electrode means, each having relatively displaceable upper and lower electrode portions and thereby being adapted to conductively clamp first and second workpieces respectively, and means for varying the separation of the first and second electrode means, further comprising a shield as claimed in any of the preceding claims.

## Patentansprüche

1. Abschirmung (38) für eine Abbrennstumpfschweißvorrichtung (10) der Art, die folgendes umfaßt: eine erste und eine zweite Elektrode (16, 24; 18, 26), die jeweils einen relativ zueinander verschieblichen oberen (24, 26) und unteren (16, 18) Elektrodenabschnitt aufweisen und so jeweils ein erstes und ein zweites Werkstück (20, 22) leitend einspannen können, Mittel (14) zum Variieren des Abstandes zwischen der ersten und der zweiten Elektrode, Umschließungswände (40, 46) zur Bildung eines umschlossenen Volumens um eine Schweißregion zwischen den beiden Elektroden, und Einlaßmittel (52) zum Einleiten von Gas in das umschlossene Volumen, wobei die Abschirmung dadurch gekennzeichnet ist, daß die umschließenden Wände (40, 46) mit den beiden Elektroden verbunden werden können und einen verformbaren Wandabschnitt (46) aufweisen, der eine relative Bewegung der beiden Elektroden zuläßt.

2. Abschirmung nach Anspruch 1, wobei die umschließenden Wände eine Hülle umfassen, die zwei gegenüberliegende, miteinander verbundene Wände umfaßt, die wenigstens teilweise das umschlossene Volumen definieren, wobei jede der gegenüberliegenden Wände einen verformbaren Wandabschnitt (46) aufweist.

3. Abschirmung nach Anspruch 2, wobei jede gegenüberliegende Wand an einer Endseite einer entsprechenden Elektrode befestigt werden kann.

4. Abschirmung nach Anspruch 2 oder Anspruch 3, wobei jede der gegenüberliegenden Wände einen im wesentlichen starren Wandabschnitt (40), der mit einer entsprechenden Elektrode verbunden werden kann, und einen verformbaren Wandabschnitt (46) umfaßt, der mit dem Umfang des im wesentlichen starren Wandabschnitts verbunden werden kann.

5. Abschirmung nach Anspruch 4, wobei der im wesentlichen starre Wandabschnitt (40) aus Metall besteht.

6. Abschirmung nach Anspruch 4 oder Anspruch 5, wobei der im wesentlichen starre Wandabschnitt (40) und der verformbare Wandabschnitt (46) vorzugsweise einen allgemein runden Außenumfang haben.

7. Abschirmung nach einem der Ansprüche 1 bis 6, wobei der verformbare Wandabschnitt (46) flexibel ist.

8. Abschirmung nach einem der Ansprüche 1 bis 7, wobei der verformbare Wandabschnitt (46) wärmebeständiges Material aufweist.

9. Abschirmung nach einem der Ansprüche 1 bis 8, weiter umfassend einen Schweißspritzer-Antihaftüberzug auf der Innenfläche des verformbaren Wandabschnittes (46).

10. Abschirmung nach einem der vorhergehenden Ansprüche, weiter umfassend einen Auslaß (54) für den Austritt von Luft und Gas aus dem umschlossenen Volumen.

11. Abschirmung nach einem der vorhergehenden Ansprüche, umfassend zwei trennbare Abschnitte (38a, 38b), die ineinandergreifen können, um das umschlossene Volumen zu definieren.

12. Abschirmung nach Anspruch 11, umfassend einen ersten Abschnitt (38b), der mit dem oberen Elektrodenabschnitt jeder der Elektroden verbunden werden kann, und einen zweiten Abschnitt (38a), der mit dem unteren Elektrodenabschnitt jeder der Elektroden verbunden werden kann.

13. Abschirmung nach Anspruch 11 oder Anspruch 12, weiter umfassend ein Kupplungsmittel, um ein Ineinandergreifen der beiden Abschnitte (38a, 38b) zu erleichtern.

14. Abschirmung nach Anspruch 13, wobei das Kupplungsmittel einen nach außen aufgeweiteten Abschnitt an einem eingreifenden Rand eines der Abschnitte aufweist.

15. Abschirmung nach Anspruch 1, wobei die umschließenden Wände eine Hülle umfassen, die die Schweißregion zwischen den Elektroden umgibt, wobei sich die Hülle aus einem oberen (38b) und einem unteren (38a) Hüllenabschnitt zusammensetzt, die lösbar ineinandergreifen können und jeweils zwei im wesentlichen starre Wandabschnitte (40) aufweisen, die jeweils mit einem entsprechenden der Elektrodenabschnitte und einem flexiblen Wandabschnitt (46) verbunden sind, der am Umfang des im wesentlichen starren Wandabschnitts (40) befestigt ist, wobei die flexiblen Wandabschnitte (46) jedes der Hüllenabschnitte miteinander verbunden sind und wobei der obere (38b) und der untere (38a) Hüllenabschnitt Zusammenwirken, wenn sich die Elektrodenabschnitte in einer Werkstück-Einspannposition befinden, um ein umschlossenes Volumen um die Schweißregion zu bilden.

16. Abbrennstumpfschweißvorrichtung (10) der Art, die folgendes umfaßt: eine erste und eine zweite Elektrode, die jeweils relativ verschiebliche obere und untere Elektrodenabschnitte aufweisen und so jeweils ein erstes und ein zweites Werkstück leitend einspannen können, und Mittel zum Variieren des Abstandes zwischen der ersten und der zweiten Elektrode, weiter umfassend eine Abschirmung nach einem der vorhergehenden Ansprüche.

## Revendications

1. Un bouclier (38) pour un appareil à souder bout à bout par étincelage (10) du type possédant une première et une seconde électrodes (16,24; 18,26), chacune ayant des parties électrodes supérieures (24,26) et inférieures (16,18) relativement déplaçables et étant donc adaptées pour caler de manière conductive une première et une deuxième pièces à usiner (20,22) respectivement, un moyen (14) pour varier la séparation de la première et de la seconde électrodes, des parois de fermeture (40,46) adaptées pour former un volume fermé entourant une zone de soudage entre les deux électrodes et un dispositif d'admission (52) pour la pénétration de gaz dans le volume fermé, le bouclier étant caractérisé par le fait que les parois de fermeture (40,46) peuvent être connectées aux deux électrodes et comprennent un partie paroi déformable (46) pour permettre le mouvement relatif des deux électrodes.

2. Un bouclier comme revendiqué dans la première revendication, dans lequel les parois de fermeture comprennent une enveloppe qui comprend deux parois opposées raccordées ensemble pour définir, partiellement au moins, le volume fermé, chacune des parois opposées comprenant une partie paroi déformable (46).

3. Un bouclier comme revendiqué dans la deuxième revendication, dans lequel chaque paroi opposée peut être fixée à une face d'extrémité d'une électrode respective.

4. Un bouclier comme revendiqué dans la deuxième ou la troisième revendication, dans lequel chacune des parois opposées comprend une partie paroi substantiellement rigide (40) qui peut être connectée à une électrode respective et une partie paroi déformable (46) qui peut être connectée à la périphérie de la partie paroi substantiellement rigide.

5. Un bouclier comme revendiqué dans la quatrième revendication, dans lequel la partie paroi substantiellement rigide (40) est fabriquée en métal.

6. Un bouclier comme revendiqué dans la quatrième ou la cinquième revendication, dans lequel la partie paroi substantiellement rigide (40) et la partie paroi déformable (46) ont toutes les deux une périphérie extérieure généralement circulaire.

7. Un bouclier comme revendiqué dans l'une quelconque des revendications 1 à 6, dans lequel la partie paroi déformable (46) est flexible.

8. Un bouclier comme revendiqué dans l'une quelconque des revendications 1 à 7, dans lequel la partie paroi déformable (46) comprend une matière résistante à la chaleur.

9. Un bouclier comme revendiqué dans l'une quelconque des revendications 1 à 8, comprenant en outre un revêtement de détachement de projections de soudure sur la surface interne de la partie paroi déformable (46).

10. Un bouclier comme revendiqué dans l'une quelconque des revendications précédentes, comprenant en outre un dispositif de sortie (54) pour l'issue d'air et de gaz du volume fermé.

11. Un bouclier comme revendiqué dans l'une quelconque des revendications précédentes, comprenant deux parties séparables (38a,38b) qui sont enclenchables l'une sur l'autre pour définir le volume fermé.

12. Un bouclier comme revendiqué dans la onzième revendication, comprenant une première partie (38b) adaptée pour être connectée à la partie électrode supérieure de chacune des électrodes et une deuxième partie (38a) adaptée pour être connectée à la partie électrode inférieure de chacune des électrodes.

13. Un bouclier comme revendiqué dans la onzième ou la douzième revendication, comprenant en outre un dispositif d'accouplement pour faciliter l'enclenchement des deux parties l'une sur l'autre (38a,38b).

14. Un bouclier comme revendiqué dans la treizième revendication, dans lequel le dispositif d'accouplement comprend une partie évasée vers l'extérieur disposée sur un bord enclenchable de l'une des parties.

15. Un bouclier comme revendiqué dans la première revendication, dans lequel les parois de fermeture comprennent une enveloppe entourant la zone de soudage entre les électrodes, l'enveloppe comprenant une partie enveloppe supérieure (38b) et une partie enveloppe inférieure (38a) enclenchables et désenclenchables, chacune d'entre elles comprenant deux parties parois substantiellement rigides (40), chacune pouvant être connectée respectivement à l'une des parties électrodes et une partie paroi fixe (46) fixée à la périphérie de la partie paroi substantiellement rigide (40), les parties parois flexibles (46) de chacune des parties enveloppes étant connectées ensemble et les parties enveloppes supérieure (38b) et inférieure (38a) travaillant ensemble lorsque les parties électrodes sont en position de calage d'une pièce à usiner, pour former un volume fermé autour de la région de soudage.

16. Un appareil à souder bout à bout par étincelage (10) du type ayant une première et une seconde électrodes, chacune ayant des parties élecrodes supérieures et inférieures relativement déplaçables et étant ainsi adaptées pour caler de manière conductive la première et la deuxième pièces à usiner respectivement et un moyen pour varier la séparation de la première et de la deuxième électrodes, comprenant en outre un bouclier comme revendiqué dans l'une quelconque des revendications précédentes.
